# EUROPEAN PATENT SPECIFICATION

(11) **EP 4 571 104 B1**
(45) Date of publication and mention of the grant of the patent: **23.09.2026**
(21) Application number: 24150458.8
(22) Date of filing: 05.01.2024
(51) Int. Cl.: F03D 15/00, F03D 80/50

(54) **ROTOR TURN DRIVE FOR WIND TURBINE GENERATOR AND METHOD THEREOF**
ROTORDREHANTRIEB FÜR WINDTURBINENGENERATOR UND VERFAHREN DAFÜR
ENTRAÎNEMENT DE TOUR DE ROTOR POUR GÉNÉRATEUR D'ÉOLIENNE ET PROCÉDÉ ASSOCIÉ

(30) Priority: 15.12.2023 IN 202311085820
(43) Date of publication of application: 18.06.2025
(73) Proprietor: RE Technologies GmbH, 22083 Hamburg (DE)
(72) Inventor: M, Raghavendra, 560087 Bangalore (IN); Khan, Yousuff, 560045 Bangalore (IN)
(74) Representative: Buzzi, Notaro & Antonielli d'Oulx S.p.A.

(56) References cited:
- KR-B1- 101 346 177
- US-A1- 2011 260 461

## Description

### Field of Invention:

The present invention is in the field of wind turbine. Particularly, the present invention provides a rotor turn drive for service intervention operation of wind turbine generator. The rotor turn drive will help in the rotation of the rotor to position the blade and lock the Rotor, during service and maintenance process.

### Background of the Invention.

The following background discussion includes information that may be useful in understanding the present invention. It is not an admission that any of the information provided herein is prior art or relevant to the presently claimed invention, or that any publication expressly or implicitly referenced is prior art.

The wind has historically been one of the most widely used natural resources to provide the energy necessary to power our needs. As the demand for energy has increased and the supplies of fossil dwindled, resulting there has been a renewed look by electrical utility companies at alternative methods for producing electrical power. One method of electrical production involves the harnessing of the wind by a wind turbine to drive an electrical generator.

As wind turbine is a continuously moving machine, hence, it is difficult to service and maintain the turbine, during its motion. Thus, in wind turbine generator, Rotor turn Drive is used for service intervention operation. During service intervention in the wind turbine, it is required to move the rotor into a defined position. At low speeds, the external auxiliary drive is usually used by the technician to do so, however, at high speed, it becomes difficult. It is still not possible to position the blade and lock the Rotor, efficiently, during service and maintenance intervention.

ES2410104T3 discloses an auxiliary drive system for driving a wind turbine component, comprising a motor (200), reduction gears (100) comprising multiple stages operatively connected to said engine, and a pinion operatively connected to said reducing gears to drive said wind turbine component, the auxiliary drive system being also provided with one or more locks (300, 400, 500; 600; 700), said one or more locks comprising at least one blocking element (350; 540, 560; 640, 660; 750).

Further, ES2661265T3 discloses a maintenance system (30) for maintaining a brake device (24) of a yaw braking system of a wind turbine comprising the brake device (24) and a brake disc (22) arranged horizontally, wherein the system includes a frame (32), characterized in that the maintenance system (30) comprises: - mounting means (34) for mounting the frame (32) in a fixed position with respect to the brake disc (22 ), - coupling means (36) for securing at least a part (25; 26) of the brake device (24) to the frame (32), and - guiding means (38) that are adapted to allow said part ( 25; 26) of the brake device (24), while secured to the frame (32), move in the frame (32) with respect to the brake disc (22).

Another document, WO2002044561A1 discloses a wind power plant, comprising means for moving the rotor blades (RB) about the longitudinal axis (LA). Said means have at least one actuator (SA) with a control motor (SM) for moving at least one rotor blade (RB), at least one auxiliary generator (HG) for supplying electrical energy from the kinetic energy of the rotor shaft (RW), a fault detection device (SI) which is active in a fault scenario (FF), and a switching-over device (US). When activated, said switching-over device conducts the electrical energy of the auxiliary generator to at least one control motor, in order to move at least one rotor blade into a flag position (FS). Associated with this is the advantage that low-wear, low-maintenance control motors can be used without a static auxiliary energy device.

Another document, US2011/260461 A1 discloses a rotor turning device for a wind turbine generator which can be used without having to modify the existing wind turbine generator, and a method for turning the rotor. A rotor turning device comprises, on the inner periphery, a first member acting as a fixing member for fixing to a coupling hub, and on the outer periphery, a second member acting as an operating member to which operational force for rotating a rotation axis of the wind turbine generator is inputted. A pair of the first members embracingly fixes to the coupling hub of a coupling, while the second member attaches to the pair of first members to form a handle-like shape.

Yet another document, KR101346177 B1 discloses a rotor rotating device for a wind power generator. The rotor rotating device for a wind power generator includes a rotor lock disc through which a rotary shaft connected to a hub of a rotor is penetrated and which is rotated by being interlocked with the hub; and a gear type disc main driving unit which is engaged with the outer circumference of the rotor lock disc and which provides power rotating the rotor lock disc.

The above-mentioned technologies are very complicated in functioning as well as are expensive. Also, it is still not possible for the rotor turn drive to lock at different locking position during service intervention operation in a simple and cost-effective manner. Hence, there is a need of a rotor turn drive mechanism, which can be rotated manually as well as with Service Variant Turn drive and which can provide support for Rotor locking during Service Intervention.

Further, there is also a need of a rotor turn drive mechanism which is a service portable tool and is not an inherent part of the turbine, thus, reducing the overall cost and budget of the wind turbine.

### Object(s) of the present invention:

The primary objective of the present invention is to overcome the drawback associated with prior art.

Another object of the present invention is to provide a rotor turn drive for service intervention operation of wind turbine generator.

Another object of the present invention is to provide a cost effective rotor turn drive for service intervention operation of wind turbine generator.

Another object of the present invention is to provide a rotor turn drive for service intervention operation of wind turbine generator which is easy to install and remove.

Another object of the present invention is to provide a rotor turn drive which can used manually without any risk issue and in absence of power supply.

Another object of the present invention is to provide a method of operation of a rotor turn drive for service intervention operation of wind turbine generator.

### Summary of the Invention:

In an aspect, the invention provides a rotor turn drive (RTD) according to claim 1.

In an embodiment, the wire cut sprocket (2) having weight of 5kg each with Z = 65, Pitch Diameter = 395 mm and Pitch = 19.05 mm.

In an embodiment, the RTD chain (3) is made of stainless-steel having Pitch = 19.05 mm, Length = 3000 mm and Weight = 3.9 kg (1.3 kg/m).

In an embodiment, torque wrench socket (6) comprises a reversible rachet and a fixed square drive pin for tightening.

In an embodiment, the RTD bracket (1) is attached to a base having plurality of holes, wherein the holes having provision for bolt, wherein the bolt is inserted in the holes and tightened on the generator frame.

In an embodiment, the RTD bracket (1) comprises an idler mechanism configured to provide tension to the RTD chain (3).

In an embodiment, at least six bolt of size M12 is configured to attach the RTD bracket (1) with the generator frame, wherein the bolts having tensile area of 113 mm2 and stress on Bolts is 90MPA.

In an embodiment, the torque wrench socket (6) is configured to rotate manually or by an electric drive, wherein the ratio (1:5) of chain sprockets (2, 12) reduces the torque to 5:1, wherein torque required to rotate the shaft of the generator(13) is at least 780 Nm and torque required to rotate torque wrench socket (6) is 156 Nm.

In an embodiment, RTD bracket (1) comprises a braking mechanism installed such that it restricts movement of shaft generator by intervening the inside the RTD chain (3).

In an aspect, the invention provides a method of operation of rotor turn drive as defined in claim 11.

For better understanding of the present disclosure, its operating advantages, and the specified objective attained by its uses, reference should be made to the accompanying descriptive matter in which there are illustrated exemplary embodiments of the present invention.

### DETAILED DESCRIPTION OF DRAWING:

The accompanying drawings, which are incorporated in and constitute a part of this disclosure, illustrate exemplary embodiments and, together with the description, explain the disclosed principles. The reference numbers are used throughout the figures to describe the features and components. Some embodiments of system and/or methods in accordance with embodiments of the present subject matter are now described, by way of example only, and regarding the accompanying figures, in which:
**Figure 1****:** illustrates the rotor turn drive of the present invention.
**Figure 2****:** illustrates bracket of the rotor turn drive of the present invention.
**Figure 3****:** illustrates bracket installation at generator in the present invention.
**Figure 4****:** illustrates the rotor turn drive in working condition in the present invention.
**Figure 5****:** illustrates the chain connection in the present invention.
**Figure 6****:** illustrates the manual drive of rotor turn drive of the present invention.
**Figure 7****:** illustrates the electric drive of rotor turn drive of the present invention.
**Figure 8****:** illustrates the ratio conversion of force due to sprocket size ratio in present invention.

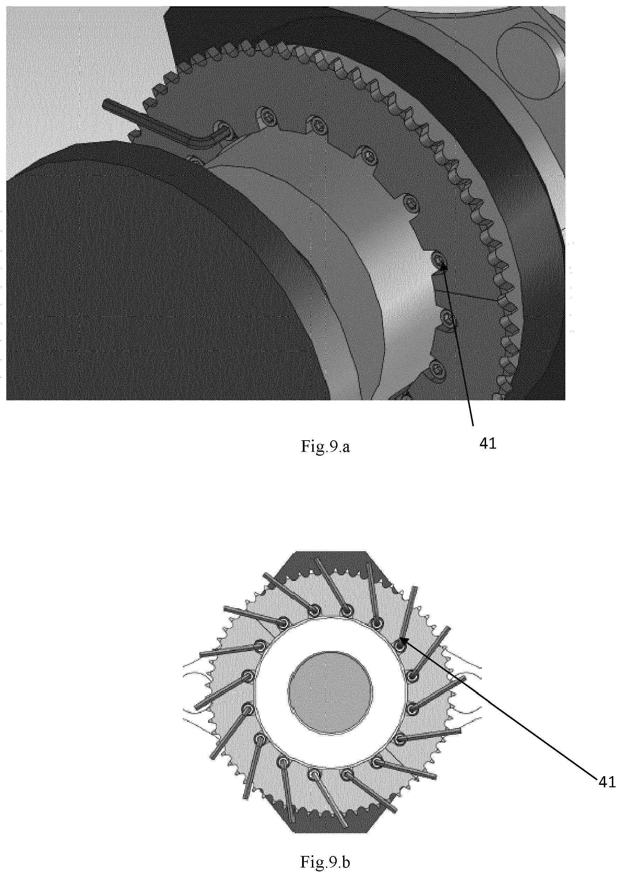

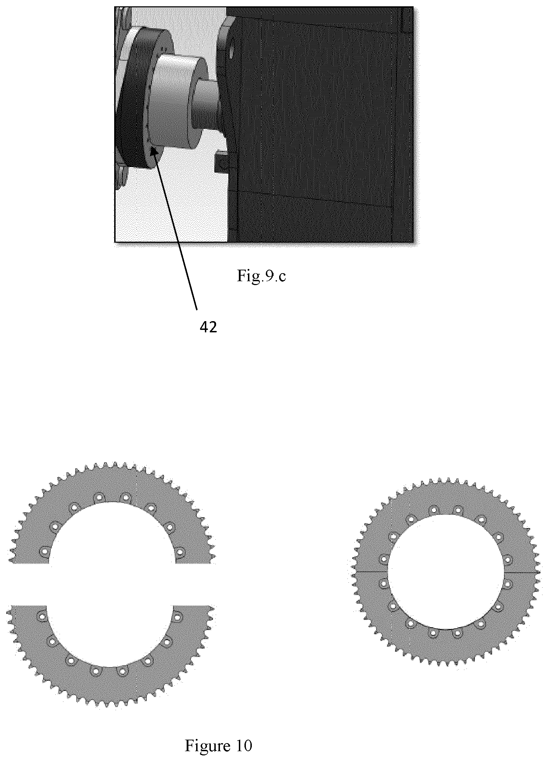

**Figure 9****:** illustrates the assembly and coupling of wire cut sprocket with shaft of the generator.
**Figure 10** illustrates view of split sprocket or wire cut sprocket of the present invention

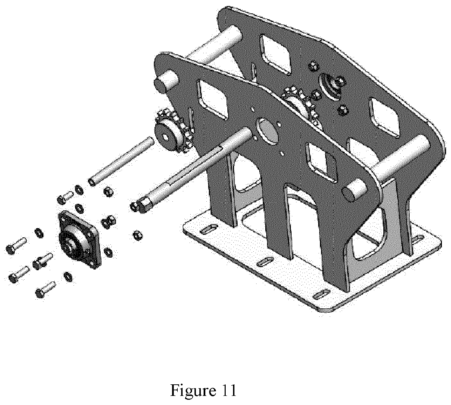

**Figure 11** illustrates another embodiment of rotor turn drive of the present invention

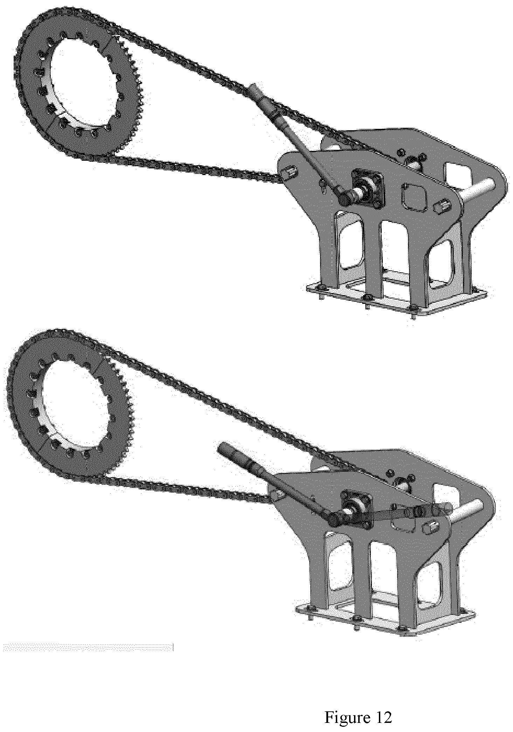

**Figure 12** illustrates another embodiment of rotor turn drive of the present invention

### Detailed description of the invention:

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example, in the drawings and will be described in detail below. It should be understood, however, that it is not intended to limit the disclosure to the specific forms disclosed.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In an embodiment, present invention provides a rotor turn drive for service intervention operation of wind turbine generator.

In an aspect, the invention provides a rotor turn drive (RTD) according to claim 1.

In an embodiment, torque required to rotate the shaft of the generator (13) is 780 Nm while the torque required to rotate torque wrench socket (6) is 156 Nm.

In an embodiment, 360 degree rotation of coupling shaft will rotate main rotor shaft to 2.3 degree, with 1:155 Gear ratio.

In an embodiment, the wire cut sprocket (2) having weight of 5kg each with Z = 65, Pitch Diameter = 395 mm and Pitch = 19.05 mm.

In an embodiment, the RTD chain (3) is made of stainless-steel having Pitch = 19.05 mm, Length = 3000 mm and Weight = 3.9 kg (1.3 kg/m).

In an embodiment, the torque wrench socket (6) comprises a reversible rachet and fixed square drive pin for tightening.

In an embodiment, the RTD bracket (1) is attached to a base comprising plurality of holes, wherein the holes comprises provision for bolt, said bolt is inserted in the holes and tightened on the generator frame.

In an embodiment, the RTD bracket (1) comprises an idler mechanism configured to provide tension to the RTD chain (3).

In an embodiment, at least six bolt of size M12 is configured to attach the RTD bracket (1) with the generator frame / bracket, said bolts comprises tensile area of 113 mm2 and stress on Bolts is 90MPA.

In an embodiment, RTD bracket (1) comprises a braking mechanism installed such that it restrict movement of shaft generator by intervening the inside the RTD chain (3).

According to the invention, the small sprocket is rotated through electric torque runner or ratchet wrench which will rotate HSS shaft through split sprocket while the HSS Shaft of Gearbox in turn will rotate the LSS and Rotor hub ensuring the rotation of the Rotor Hub in slow speed enabling to lock the Rotor manually.

In an embodiment, the wire cut sprocket (2), being connected to said small sprocket which is mounted in the bracket through a chain, is mounted to coupling which in turn is connected to Gearbox HSS.

Further, the rotor turn drive mechanism, can be rotated manually as well as with Service Variant Turn drive. The newly developed mechanism is designed to support for Rotor locking during following operations Service Interventions which make this cost effective as we use this portable tool. The mechanism and process followed to the service intervention is very simple. In another aspect of the invention, there is provided a method of operation of rotor turn drive as defined in claim 11.

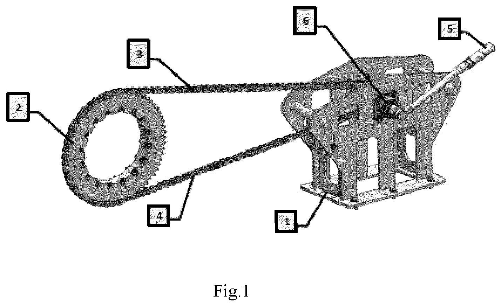

As shown in Figure 1, the rotor turn drive of the present invention is used for the service intervention operation of wind turbine generator. During the service intervention the RTD bracket is mounted on the frame of the wind power generator. The bearing and sprocket is mounted on the bracket. The torque moment and loads which is connected to wire cut sprocket though chain. Further, a torque wrench or electric runner is used to rotate the shaft mounted with RTD Bracket with bearing and sprocket which in turn rotates the split sprocket and thereby moving the shaft of the generator.

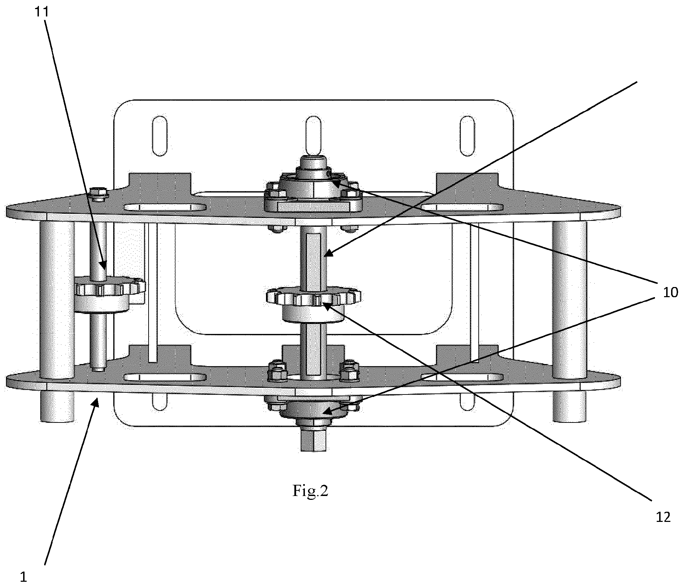

In an embodiment, the RTD bracket (1) as shown in Figure 2, comprises plurality of bearing and the sprocket. The sprocket has plurality of teeth around its circumference and the sprocket is attached to the shaft. Further, the RTD chain (3) is mesh with the sprocket and the wire cut sprocket (2) teeth for providing the rotation to the shaft. The RTD bracket (1) is attached to a base having plurality of holes, wherein the holes have provision for bolt, wherein the bolt is inserted in the holes and tightened on the generator frame. For tightening RTD bracket (1) at least six bolt of size M12 is used to attach the RTD bracket (1) with the generator frame.

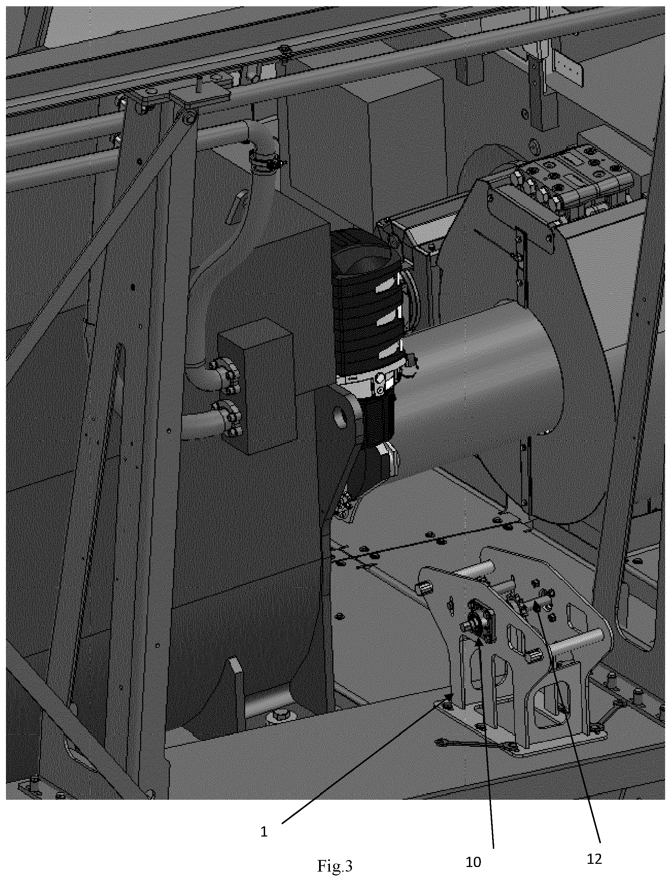

As shown in Figure 3, the RTD bracket (1) is attached to the generator frame. The base of the RTD bracket has plurality of holes. The said the holes have provision for bolt, the bolt is inserted in the holes and tightened on the generator frame. The bolt used for tightening is hex type with size of M12 is used to attach the RTD bracket (1) with the generator frame.

In an embodiment, the RTD bracket (1) includes bearing unit, shaft and sprocket. The bearing unit is attached to the RTD bracket in hole provided thereon and tightened by the nut and bolts. The RTD bracket has two parallel sides where the hole for the bearing unit is provided at each side. The shaft is inserted into the hole of the RTD bracket before attaching the bearing unit. The shaft bears the sprocket in the middle of its length and tightened along the cut made on the shaft for the tight attachment. The shaft has diameter of 25mm, and sprocket attached to it has Z=13, Pitch Diameter=79mm, and Pitch=19.05mm.

In an embodiment, the RTD bracket (1) includes bearing unit, shaft (9) and sprocket (12). The bearing unit, shaft (9) and sprocket (12) can be adjustable. The shaft (9) has cut along its length which is provided for the tightening of the sprocket (12) of the shaft (9). The cut along the length of the shaft provides more space for the alignment of the sprocket (12) with the wire cut sprocket (12). The alignment of the sprocket is essential to RTD chain tension and for the proper torque management.

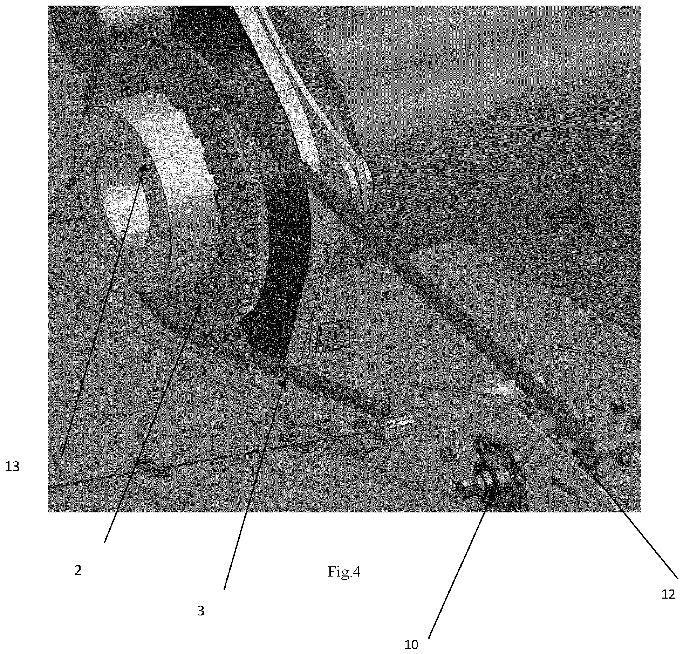

In an embodiment, as shown in Figure 4, the wire cut sprocket (2) has circular shape. The wire cut sprocket (2) is assembled by joining two semi-circle halves around shaft of wind turbine generator. The wire cut sprocket (2) includes plurality of teeth around its circumference. The said teeth provides the wire cut sprocket (2) grip around the shaft of wind turbine generator. The two halves of the wire cut sprocket (2) provides the technician option of assemble the wire cut sprocket (2) around the shaft of the wind turbine generator with ease. The assembly time is less time consuming as two halves need to be attached together with nut and bolt, can be easily assembled by the less skilled technician. The wire cut sprocket (2) has dimension of Z=65, Pitch diameter =395, Pitch=19.05 mm respectively.

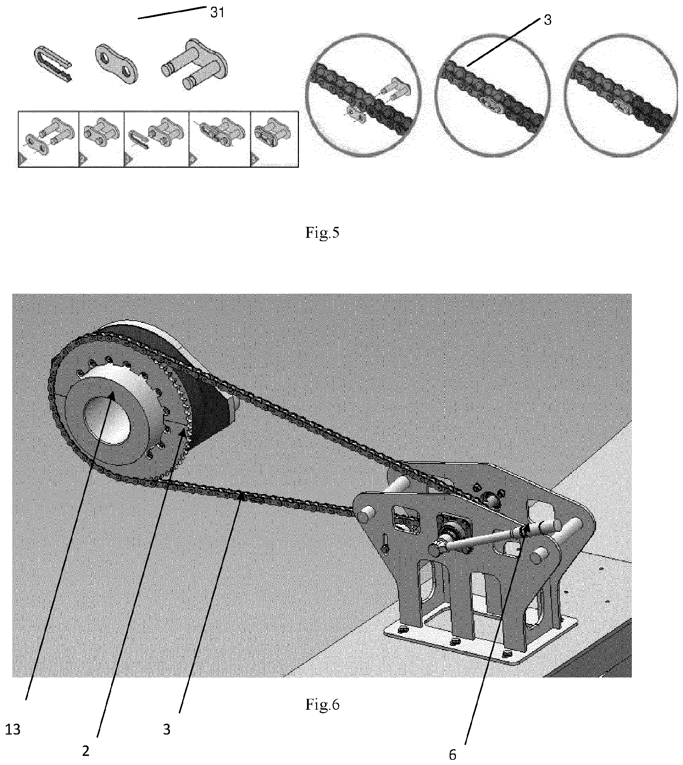

In an embodiment, the RTD chain (3) as shown in Figure 5, which is meshed to the sprocket (12) of RTD bracket (1) and further meshed with the wire cut sprocket (2). While connecting the respective sprocket of the rotor turn drive by the RTD chain (3), first the RTD chain (3) is mesh with the teeth of the sprocket (12) and in next step the RTD chain (3) is mesh with the teeth of the wire cut sprocket (2). Next step is to check alignment of the RTD chain (3) with the sprocket, thereafter once the alignment meets the working requirement, then the RTD chain (3) is connected around its length by a connecting mechanism (31). After attachment of RTD chain (3) with the connecting mechanism (31), the RTD chain (3) forms loop structure and is now configured to rotate both of the sprocket when the torque is applied by rotating torque wrench socket (6).

Furter, figures 6 to7 shows the working of rotor turn drive of the present invention for the service intervention operation of wind turbine generator. During the service intervention the RTD bracket (1) is mounted on the frame of the wind power generator. The bearing (10) and sprocket (12) is mounted on the RTD bracket (1). Further, after RTD chain (3) is connected with the sprocket (12) and the wire cut sprocket (2). Thereafter the alignment of the RTD chain (3) is checked and is connected around its length by a connecting mechanism (31). After attachment of RTD chain (3) with the connecting mechanism (31), the RTD chain (3) forms loop structure and is now configured to rotate both sprockets when the torque is applied by rotating torque wrench socket (6).

In an embodiment, the torque moment to the loads can be provided electrically or manually. Figure 6 shows the manual working of rotor turn drive of the present invention. In this embodiment, a torque tool is attached to the torque wrench socket (6) and torque tool is rotated by the technician by their hand. The rotation of torque tool creates torque for the rotation of both the sprockets (12, 2). The movement of sprockets through the RTD chain (3) further rotates the shaft of the generator of the wind turbine. The shaft movement of the wind turbine generator provided movement to the blade of wind turbine.

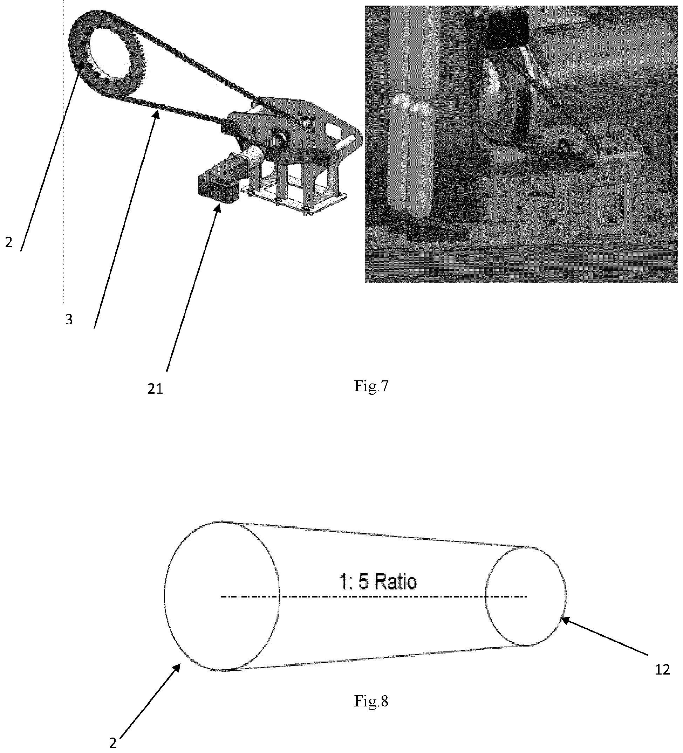

In an embodiment, as shown in figure 7 of the present invention, the electric torque tool (21) is attached to the torque wrench socket (6) and torque tool is rotated is powered by the portable battery attached thereon. The rotation of torque tool creates torque for the rotation of both the sprockets (12, 2). The movement of sprockets through the RTD chain (3) further rotates the shaft of the generator of the wind turbine. The shaft movement of the wind turbine generator provided movement to the blade of wind turbine.

Figure 8 shows the sprockets (2, 12) of the present invention. The sprockets (2, 12) have the size ratio of 1:5. The said ratio provides the added advantage of force required to rotate the smaller sprocket (12) by a technician for service intervention is less. The space inherently available near wind turbine generator for any maintenance work is very limited. The present invention system can be easily assembled in the said space by the technician in less time. Further, after installation of the system the main required work is to rotate the shaft (13) of the wind turbine generator to start the maintenance work. Usually, a hand lever or wrench is carried by the technicians to rotate the wrench socket (6). For rotation of the wrench socket (6) it is very critical to configure the gear assembly of the rotor system such that force required to rotate the wrench socket is under the limit of the human intervention. The ratio of the sprockets allows the rotor system to reduce the force required for rotation of the wrench socket (6). The sprockets (2, 12) with the size ratio of 1:5 reduces the force requirement, example: the force required to rotate the rotor (13) of the wind turbine generator is at least 780 Nm and due to the size ratio is 1:5 the force require to rotate the sprocket (12) is 156 Nm. The required force is easily manageable by the technician. Further, anyhow technician is not fit to rotate the wrench socket (6) manually, then small battery-operated electric drive can fulfil the purpose in the available space.

In an embodiment, during the service intervention of the wind turbine, rotor turn drive provide the required movement to the blade of the wind turbine. Once the blade position is achieved the torque movement of the rotor turn dive is stopped and a braking mechanism (11) is activated. The braking mechanism (11) is installed in such a way that it restrict movement of shaft of the generator by intervening the inside the RTD chain (3). The braking mechanism (11) provides extra cushion and safety to the technical to restrict the further movement and prevent any accident during the maintenance of the wind turbine generator.

The Invention is further described with the help of non-limiting examples:

### Example 1:

Torque required at HSS for turn drive meant for service intervention:
Calculated torque required at HSS -

The number for teeth in pump gear is 33.
M130 gear stages :
- Stage-1: 24 / 35 / -96
- Stage-2: 24 / 53 / -132
- Stage-3 60Hz (i=123,276): 32 / 121
- Stage-3 50Hz (i=153,750): 26 / 123

Hence,
1^{st} stage Ratio = (1-(-96/24)) = 5.0
2^{nd} stage Ratio = (1-(-132/24)) = 6.5
3^{rd} stage Ratio = 123/26 = 4.730 est.
Total Ratio = 153.75
Pump Gear Ratio = 123/33 = 3.727 est.
Ti = 1000 Nm
Torque at Rotor shaft (Tr₎ = 5 × 6.5 × 3.72 × 1000 = 1,20,900
Torque at HSS = 120900/153.75 = 786.34 Nm est.

### Example 2:

The following steps are to be performed for operating the rotor turn drive to rotate the rotor to position the blade and lock the Rotor, during service and maintenance process.
- Before installing the Rotor Turn Drive bracket, remove grating pates of right side of generator frame
- Remove the Coupling cover and secure it proper place
- Mount the driven split sprocket on coupling provided hole provision
- Mount the Bracket on generator frame
- Adjust the Drive Sprocket if required to align with split sprocket
- Connect both sprocket with chain by adding chain link
- Connect hand lever and check the alignment of Sprocket and chain
- After proper alignment, full brake can be removed for rotating turn drive with battery back Torque/Bolt Runner
- For fine adjustment, use Hand lever, if required

## Claims

1. A rotor turn drive (RTD) for service intervention operation of a wind turbine generator comprising:
a) a rotor turn drive bracket (1) attached to the wind turbine generator, positioned at 6-degree inclination, comprises a plurality of bearings (10) with a small sprocket (12) comprising a plurality of teeth around its circumference, being attached to a shaft (9);
b) a wire cut sprocket (2) having a circular shape, wherein the wire cut sprocket (2), assembled by joining two semi-circle halves around a coupling shaft (13) of the wind turbine generator, comprises a plurality of holes (41) around its circumference, wherein
when the wire cut sprocket (2) is assembled around the coupling shaft (13) of the wind turbine generator the holes (41) around the circumference of the wire cut sprocket (2) match with a plurality of holes (42) of the coupling shaft (13) for coupling with a plurality of bolts;
said wire cut sprocket (2), being connected to said small sprocket (12), which is mounted in the bracket (1), through a chain, is mounted to the coupling shaft (13), which in turn is connected to a gearbox high speed shaft (HSS);
wherein the small sprocket is rotatable through an electric torque runner or a ratchet wrench which will rotate the HSS shaft through the wire cut sprocket while the gearbox high speed shaft (HSS) in turn will rotate a low speed shaft (LSS) and a rotor hub ensuring the rotation of the rotor hub in slow speed enabling to lock the rotor manually;
c) a RTD chain (3), wherein the RTD chain (3) is configured to mesh with the small sprocket (12) and the wire cut sprocket (2) teeth to form a loop structure, wherein the wire cut sprocket (2) and the small sprocket (12) comprises a size ratio of 1:5;
d) a torque wrench socket (6), wherein the torque wrench socket is attached to the small sprocket (12) of the RTD bracket (1);
wherein the RTD bracket (1) is detachably attachable to a generator frame of the wind turbine generator and the RTD chain (3) is configured to rotate the wire cut sprocket (2) and the small sprocket (12) when the torque is applied by rotating the torque wrench socket (6), wherein the size ratio of the wire cut sprocket (2) and the small sprocket (12) reduces torque to 5:1 and enables manual rotation the torque wrench socket (6).

2. The rotor turn drive as claimed in claim 1, wherein torque required to rotate the coupling shaft (13) of the generator is 780 Nm while the torque required to rotate the torque wrench socket (6) is 156 Nm.

3. The rotor turn drive as claimed in claim 1, wherein 360 degree rotation of the coupling shaft will rotate a main rotor shaft to 2.3 degree, with 1:155 gear ratio.

4. The rotor turn drive as claimed in claim 1, wherein the wire cut sprocket (2) having weight of 5kg each with Z = 65, Pitch Diameter = 395 mm and Pitch = 19.05 mm.

5. The rotor turn drive as claimed in claim 1, wherein the RTD chain (3) is made of stainless-steel having Pitch = 19.05 mm, Length = 3000 mm and Weight = 3.9 kg.

6. The rotor turn drive as claimed in claim 1, wherein the torque wrench socket (6) comprises a reversible rachet and fixed square drive pin for tightening.

7. The rotor turn drive as claimed in claim 1, wherein the RTD bracket (1) is attached to a base comprising plurality of holes, wherein the holes comprises provision for bolt, said bolt is inserted in the holes and tightened on the generator frame.

8. The rotor turn drive as claimed in claim 1, wherein the RTD bracket (1) comprises an idler mechanism configured to provide tension to the RTD chain (3).

9. The rotor turn drive as claimed in claim 1, wherein at least six bolt of size M12 is configured to attach the RTD bracket (1) with the generator frame, said bolts comprises tensile area of 113 mm2 and stress on the bolts is 90MPA.

10. The rotor turn drive as claimed in claim 1, wherein the RTD bracket (1) comprises a braking mechanism (11) installed such that it restrict movement of the coupling shaft (13) of the wind turbine generator by intervening the inside of the RTD chain (3).

11. A method of operation of the rotor turn drive (RTD) for service intervention operations of a wind turbine generator as claimed in claim 1, comprising the steps of
a) mounting the wire cut sprocket (2) on the coupling shaft (13) of the wind turbine generator and coupling the wire cut sprocket (2) and the coupling shaft (13) with a plurality of bolts wherein the bolts are inserted into a plurality of holes (41, 42) provided at a circumference of the wire cut sprocket (2) and of the coupling shaft (13);
b) mounting the RTD bracket (1) on the generator frame and connecting the small sprocket (12) and the wire cut sprocket (2) with the RTD chain (3) by adding a chain link;
c) connecting a hand lever to the torque wrench socket (6) and checking the alignment of the sprocket and RTD chain (3); and
d) rotating the torque wrench socket (6) which in turn rotates the small sprocket (12) and the RTD chain (3), the wire cut sprocket (2) and the coupling shaft (13), wherein torque is applied by rotating the torque wrench socket (6), wherein the size ratio of 1:5 of the wire cut sprocket (2) and the small sprocket (12) reduces torque to 5:1 and enables manual rotation of torque wrench socket (6).

## Patentansprüche

1. Rotordrehantrieb (RTD (rotor turn drive)) für Wartungseingriffsarbeitsvorgänge an einem Windturbinengenerator, der Folgendes umfasst:
a) eine Rotordrehantriebshalterung (1), die am Windturbinengenerator befestigt und mit einer Neigung von 6 Grad angeordnet ist und mehrere Lager (10) mit einem kleinen Kettenrad (12) umfasst, das mehrere Zähne um seinen Umfang aufweist und an einer Welle (9) befestigt ist,
b) ein drahtgeschnittenes Kettenrad (2) mit einer Kreisform, wobei das drahtgeschnittene Kettenrad (2), das durch Zusammenfügen zweier Halbkreishälften um eine Kopplungswelle (13) des Windturbinengenerators zusammengebaut ist, mehrere Bohrungen (41) um seinen Umfang herum aufweist, wobei dann, wenn das drahtgeschnittene Kettenrad (2) um die Kopplungswelle (13) des Windturbinengenerators herum zusammengebaut ist, die Bohrungen (41) um den Umfang des drahtgeschnittenen Kettenrads (2) zum Verbinden mit mehreren Schrauben mit mehreren Bohrungen (42) der Kopplungswelle (13) zusammenpassen, wobei das drahtgeschnittene Kettenrad (2), das über eine Kette mit dem in der Halterung (1) montierten kleinen Kettenrad (12) verbunden ist, an der Kopplungswelle (13) montiert ist, die ihrerseits mit einer Getriebe-Hochgeschwindigkeitswelle (HSS (high speed shaft)) verbunden ist, wobei sich das kleine Kettenrad mittels eines elektrischen Kraftschraubers oder eines Ratschenschlüssels drehen lässt, wodurch die HSS-Welle mittels des drahtgeschnittenen Kettenrads gedreht wird, während die Getriebe-Hochgeschwindigkeitswelle (HSS) wiederum eine Niedriggeschwindigkeitswelle (LSS (low speed shaft)) und eine Rotornabe dreht und so die Drehung der Rotornabe mit niedriger Drehzahl sicherstellt, was es ermöglicht, den Rotor manuell zu arretieren,
c) eine RTD-Kette (3), wobei die RTD-Kette (3) so ausgebildet ist, dass sie mit den Zähnen des kleinen Kettenrads (12) und des drahtgeschnittenen Kettenrads (2) in Eingriff steht und so eine Schleifenstruktur bildet, wobei das drahtgeschnittene Kettenrad (2) und das kleine Kettenrad (12) ein Größenverhältnis von 1:5 aufweisen,
d) einen Drehmomentschlüsseleinsatz (6), wobei der Drehmomentschlüsseleinsatz am kleinen Kettenrad (12) der RTD-Halterung (1) befestigt ist,
wobei die RTD-Halterung (1) lösbar an einem Generatorrahmen des Windturbinengenerators befestigt werden kann und die RTD-Kette (3) so ausgebildet ist, dass sie das drahtgeschnittene Kettenrad (2) und das kleine Kettenrad (12) dreht, wenn durch Drehen des Drehmomentschlüsseleinsatzes (6) das Drehmoment aufgebracht wird, wobei durch das Größenverhältnis des drahtgeschnittenen Kettenrads (2) und des kleinen Kettenrads (12) ein Drehmoment auf 5:1 reduziert und eine manuelle Drehung des Drehmomentschlüsseleinsatzes (6) ermöglicht ist.

2. Rotordrehantrieb nach Anspruch 1, bei dem ein zum Drehen der Kopplungswelle (13) des Generators erforderliches Drehmoment 780 Nm beträgt, während das zum Drehen des Drehmomentschlüsseleinsatzes (6) erforderliche Drehmoment 156 Nm beträgt.

3. Rotordrehantrieb nach Anspruch 1, bei dem durch eine 360-Grad-Drehung der Kopplungswelle eine Hauptrotorwelle um 2,3 Grad gedreht wird, bei einem Übersetzungsverhältnis von 1:155.

4. Rotordrehantrieb nach Anspruch 1, bei dem das drahtgeschnittene Kettenrad (2) ein Gewicht von 5 kg hat, jeweils mit Z = 65, Teilkreisdurchmesser = 395 mm und Teilung = 19,05 mm.

5. Rotordrehantrieb nach Anspruch 1, bei dem die RTD-Kette (3) aus nichtrostendem Stahl besteht, mit Teilung = 19,05 mm, Länge = 3000 mm und Gewicht = 3,9 kg.

6. Rotordrehantrieb nach Anspruch 1, bei dem der Drehmomentschlüsseleinsatz (6) eine umkehrbare Ratsche und einen feststehenden Vierkantantriebsstift zum Festziehen umfasst.

7. Rotordrehantrieb nach Anspruch 1, bei dem die RTD-Halterung (1) an einer Grundplatte befestigt ist, die mehrere Bohrungen aufweist, wobei die Bohrungen für Schrauben vorgesehen sind, wobei die Schraube in die Bohrungen eingesetzt und am Generatorrahmen festgezogen ist.

8. Rotordrehantrieb nach Anspruch 1, bei dem die RTD-Halterung (1) einen Spannrollenmechanismus umfasst, der so eingerichtet ist, dass er der RTD-Kette (3) Spannung bereitstellt.

9. Rotordrehantrieb nach Anspruch 1, bei dem mindestens sechs Schrauben der Größe M12 zur Befestigung der RTD-Halterung (1) am Generatorrahmen ausgebildet sind, wobei die Schrauben eine Zugfläche von 113 mm² aufweisen und die Spannung an den Schrauben 90 MPa beträgt.

10. Rotordrehantrieb nach Anspruch 1, bei dem die RTD-Halterung (1) einen Bremsmechanismus (11) umfasst, der so angebracht ist, dass er die Bewegung der Kopplungswelle (13) des Windturbinengenerators durch Eingriff in das Innere der RTD-Kette (3) begrenzt.

11. Verfahren zum Betreiben des Rotordrehantriebs (RTD) für Wartungseingriffsarbeitsvorgänge an einem Windturbinengenerator nach Anspruch 1, das die folgenden Schritte umfasst:
a) Montieren des drahtgeschnittenen Kettenrads (2) an der Kopplungswelle (13) des Windturbinengenerators und Verbinden des drahtgeschnittenen Kettenrads (2) und der Kopplungswelle (13) mit mehreren Schrauben, wobei die Schrauben in mehrere Bohrungen (41, 42) eingesetzt werden, die an einem Umfang des drahtgeschnittenen Kettenrads (2) und der Kopplungswelle (13) vorgesehen sind,
b) Montieren der RTD-Halterung (1) am Generatorrahmen und Verbinden des kleinen Kettenrads (12) und des drahtgeschnittenen Kettenrads (2) mit der RTD-Kette (3) durch Hinzufügen eines Kettenglieds,
c) Verbinden eines Handhebels mit dem Drehmomentschlüsseleinsatz (6) und Überprüfen der Ausrichtung des Kettenrads und der RTD-Kette (3), und
d) Drehen des Drehmomentschlüsseleinsatzes (6), wodurch wiederum das kleine Kettenrad (12) und die RTD-Kette (3), das drahtgeschnittene Kettenrad (2) und die Kopplungswelle (13) gedreht werden, wobei durch Drehen des Drehmomentschlüsseleinsatzes (6) ein Drehmoment aufgebracht wird, wobei durch das Größenverhältnis von 1:5 zwischen dem drahtgeschnittenen Kettenrad (2) und dem kleinen Kettenrad (12) ein Drehmoment auf 5:1 reduziert und eine manuelle Drehung des Drehmomentschlüsseleinsatzes (6) ermöglicht wird.

## Revendications

1. Dispositif d'entraînement en rotation de rotor (RTD) pour une opération d'intervention de maintenance d'un générateur d'éolienne, comprenant :
a) un support de dispositif d'entraînement en rotation de rotor (1), support RTD (1), fixé au générateur d'éolienne et positionné avec une inclinaison de 6 degrés, qui comprend une pluralité de roulements (10) avec un petit pignon (12) comprenant une pluralité de dents autour de sa circonférence fixé à un arbre (9) ;
b) un pignon découpé par électroérosion au fil (2) ayant une forme circulaire, dans lequel le pignon découpé par électroérosion au fil (2), assemblé en joignant deux demi-cercles autour d'un arbre d'accouplement (13) du générateur d'éolienne, comprend une pluralité de trous (41) autour de sa circonférence, dans lequel
lorsque le pignon découpé par électroérosion au fil (2) est assemblé autour de l'arbre d'accouplement (13) du générateur d'éolienne, les trous (41) autour de la circonférence du pignon découpé par électroérosion au fil (2) correspondent à une pluralité de trous (42) de l'arbre d'accouplement (13) pour un accouplement avec une pluralité de boulons :
ledit pignon découpé par électroérosion au fil (2), relié audit petit pignon (12), qui est monté dans le support (1) par l'intermédiaire d'une chaîne, est monté sur l'arbre d'accouplement (13), lequel est à son tour relié à un arbre rapide (HSS) de multiplicateur ;
dans lequel le petit pignon peut être mis en rotation par un tournevis à couple électrique ou une clé à cliquet qui entraîne la rotation de l'arbre HSS par l'intermédiaire du pignon découpé par électroérosion au fil, tandis que l'arbre rapide (HSS) de multiplicateur entraîne à son tour la rotation d'un arbre lent (LSS) et d'un moyeu de rotor, assurant la rotation à basse vitesse du moyeu de rotor permettant de verrouiller manuellement le rotor ;
c) une chaîne de dispositif d'entraînement en rotation de rotor, chaîne RTD (3), dans lequel la chaîne RTD (3) est configurée pour s'engrener avec les dents du petit pignon (12) et du pignon découpé par électroérosion au fil (2) afin de former une structure en boucle, dans lequel le pignon découpé par électroérosion au fil (2) et le petit pignon (12) présentent un rapport de taille de 1:5 ;
d) une douille de clé dynamométrique (6), dans lequel la douille de clé dynamométrique est fixée au petit pignon (12) du support RTD (1) ;
dans lequel le support RTD (1) peut être fixé de manière amovible à un châssis de générateur du générateur d'éolienne, et la chaîne RTD (3) est configurée pour faire tourner le pignon découpé par électroérosion au fil (2) et le petit pignon (12) lorsque le couple est appliqué par la rotation de la douille de clé dynamométrique (6), dans lequel le rapport de taille entre le pignon découpé par électroérosion au fil (2) et le petit pignon (12) réduit le couple de 5:1 et permet la rotation manuelle de la douille de clé dynamométrique (6).

2. Dispositif d'entraînement en rotation de rotor tel que revendiqué dans la revendication 1, dans lequel le couple nécessaire pour faire tourner l'arbre d'accouplement (13) du générateur est de 780 Nm, tandis que le couple nécessaire pour faire tourner la douille de clé dynamométrique (6) est de 156 Nm.

3. Dispositif d'entraînement en rotation de rotor tel que revendiqué dans la revendication 1, dans lequel une rotation de 360 degrés de l'arbre d'accouplement entraîne la rotation d'un arbre de rotor principal de 2,3 degrés, avec un rapport de transmission de 1:155.

4. Dispositif d'entraînement en rotation de rotor tel que revendiqué dans la revendication 1, dans lequel le pignon découpé par électroérosion au fil (2) a un poids de 5 kg avec Z = 65, un diamètre primitif = 395 mm et un pas = 19,05 mm.

5. Dispositif d'entraînement en rotation de rotor tel que revendiqué dans la revendication 1, dans lequel la chaîne RTD (3) est réalisée en acier inoxydable ayant un pas = 19,05 mm, une longueur = 3000 mm et un poids = 3,9 kg.

6. Dispositif d'entraînement en rotation de rotor tel que revendiqué dans la revendication 1, dans lequel la douille de clé dynamométrique (6) comprend un cliquet réversible et une broche d'entraînement carrée fixe pour le serrage.

7. Dispositif d'entraînement en rotation de rotor tel que revendiqué dans la revendication 1, dans lequel le support RTD (1) est fixé à une base comprenant une pluralité de trous, dans lequel les trous sont prévus pour recevoir un boulon, ledit boulon est inséré dans les trous et serré sur le châssis de générateur.

8. Dispositif d'entraînement en rotation de rotor tel que revendiqué dans la revendication 1, dans lequel le support RTD (1) comprend un mécanisme tendeur configuré pour fournir une tension à la chaîne RTD (3).

9. Dispositif d'entraînement en rotation de rotor tel que revendiqué dans la revendication 1, dans lequel au moins six boulons de taille M12 sont configurés pour fixer le support RTD (1) au châssis de générateur, lesdits boulons présentent une section de traction de 113 mm2 et une contrainte appliquée sur les boulons est de 90 MPa.

10. Dispositif d'entraînement en rotation de rotor tel que revendiqué dans la revendication 1, dans lequel le support RTD (1) comprend un mécanisme de freinage (11) installé de manière à limiter le mouvement de l'arbre d'accouplement (13) du générateur d'éolienne en intervenant à l'intérieur de la chaîne RTD (3).

11. Procédé de fonctionnement du dispositif d'entraînement en rotation de rotor (RTD) pour des opérations d'intervention de maintenance d'un générateur d'éolienne tel que revendiqué dans la revendication 1, comprenant les étapes de :
a) montage du pignon découpé par électroérosion au fil (2) sur l'arbre d'accouplement (13) du générateur d'éolienne et accouplement du pignon découpé par électroérosion au fil (2) et de l'arbre d'accouplement (13) avec une pluralité de boulons, dans lequel les boulons sont insérés dans une pluralité de trous (41, 42) prévus au niveau de la circonférence du pignon découpé par électroérosion au fil (2) et de l'arbre d'accouplement (13) ;
b) montage du support RTD (1) sur le châssis de générateur et liaison du petit pignon (12) et du pignon découpé par électroérosion au fil (2) avec la chaîne RTD (3) par l'ajout d'un maillon de chaîne ;
c) liaison d'un levier manuel à la douille de clé dynamométrique (6) et vérification de l'alignement du pignon et de la chaîne RTD (3) ; et
d) rotation de la douille de clé dynamométrique (6), ce qui entraîne à son tour la rotation du petit pignon (12) et de la chaîne RTD (3), du pignon découpé par électroérosion au fil (2) et de l'arbre d'accouplement (13), dans lequel le couple est appliqué par la rotation de la douille de clé dynamométrique (6), dans lequel le rapport de taille de 1:5 entre le pignon découpé par électroérosion au fil (2) et le petit pignon (12) réduit le couple de 5:1 et permet la rotation manuelle de la douille de clé dynamométrique (6).
